# EUROPÄISCHE PATENTSCHRIFT

(11) **EP 0 892 223 B1**
(45) Veröffentlichungstag und Bekanntmachung des Hinweises auf die Patenterteilung: **21.04.2004**
(21) Anmeldenummer: 98110969.7
(22) Anmeldetag: 16.06.1998
(51) Int. Cl.: F24D 19/10

(54) **Steuer- und Regelgerät für eine Heizungsanlage**
Control and command system for a heating system
Dispositif de commande et de régulation pour système de chauffage

(30) Priorität: 14.07.1997 AT 119897
(43) Veröffentlichungstag der Anmeldung: 20.01.1999
(73) Patentinhaber: Siemens Building Technologies AG, 6300 Zug (CH)
(72) Erfinder: Seebacher, Theodor Ernst, 5421 Adnet (AT)
(74) Vertreter: Berg, Peter, Dipl.-Ing.

(56) Entgegenhaltungen:
- GB-A- 1 423 589
- GB-A- 2 113 427

## Beschreibung

Die Erfindung betrifft ein Steuer- und Regelgerät für eine Heizungsanlage der im Oberbegriff des Anspruchs 1 genannten Art.

Heizungsanlagen umfassen einen Erzeugerkreis und einen Verbraucherkreis. Der Erzeugerkreis enthält wenigstens einen Wärmeerzeuger, der Verbraucherkreis wenigstens einen Wärmeverbraucher. Zur Anpassung des von den Wärmeerzeugern erzeugten Volumenstromes an den von den Wärmeverbrauchern benötigten Volumenstrom sind der Erzeugerkreis und der Verbraucherkreis oft durch eine hydraulische Weiche entkoppelt. In der Praxis hat dies folgende Auswirkungen: Wenn der Volumenstrom im Erzeugerkreis grösser als der Volumenstrom im Verbraucherkreis ist, dann erfolgt wegen der hydraulischen Weiche eine Vorlaufbeimischung im Erzeugerkreis, wodurch die Rücklauftemperatur im Erzeugerkreis ansteigt. Bei modernen Brennwertkesseln ist es jedoch erwünscht, dass die Rücklauftemperatur möglichst tief ist. Wenn der Volumenstrom im Erzeugerkreis kleiner als der Volumenstrom im Verbraucherkreis ist, dann erfolgt durch die hydraulische Weiche hindurch eine Rücklaufbeimischung zum Verbraucherkreis, wodurch die Vorlauftemperatur im Verbraucherkreis unter die Vorlauftemperatur im Erzeugerkreis sinkt. Enthält der Verbraucherkreis mehrere Wärmeverbraucher, die eine unterschiedlich hohe Temperatur des Wassers im Verbraucherkreis anfordern, und übersteigt der Wärmebedarf der Wärmeverbraucher die von den Wärmeerzeugem lieferbare Wärmemenge, dann kommt es häufig vor, dass einzelne oder alle Wärmeverbraucher nur ungenügend mit Wärme versorgt werden.

Der Erfindung liegt die Aufgabe zugrunde, ein Steuer- und Regelgerät vorzuschlagen, das den Betrieb einer Heizungsanlage ermöglicht, bei der die oben genannten Mängel behoben sind.

Die genannte Aufgabe wird erfindungsgemäss gelöst durch die Merkmale der Anspruches 1.

Die Erfindung löst die gestellte Aufgabe mittels eines Steuer- und Regelgerätes, das den im Verbraucherkreis zirkulierenden Volumenstrom an den von den Wärmeerzeugern bereitgestellten Volumenstrom anpasst.

Nachfolgend werden Ausführungsbeispiele der Erfindung anhand der Zeichnung näher erläutert.

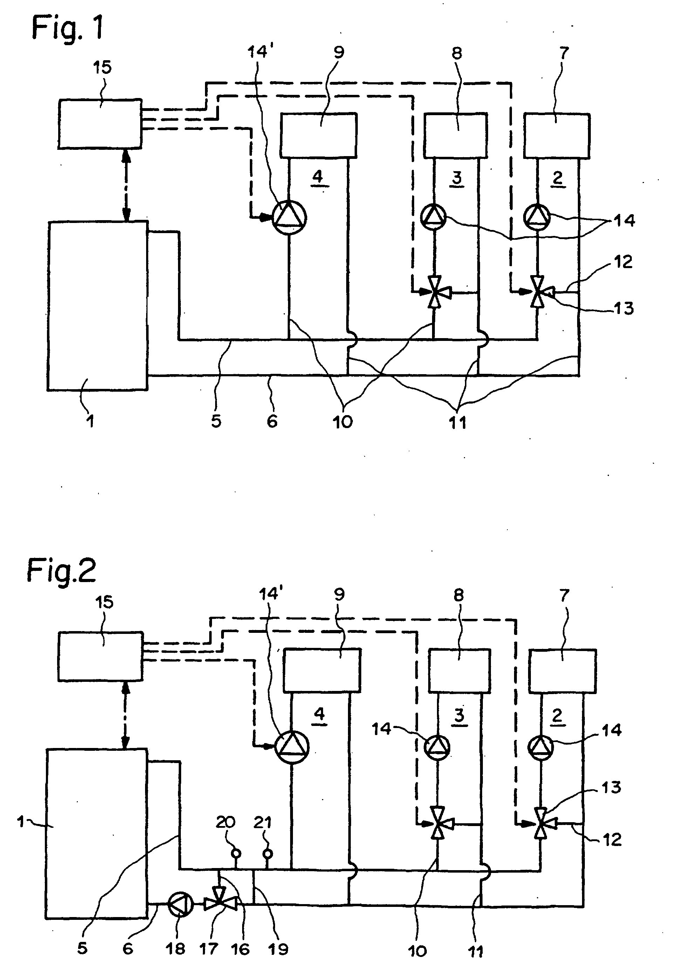

Es zeigen: Fig. 1 - 3 eine Heizungsanlage mit drei Wärmeverbrauchern.

Die Fig. 1 zeigt eine Heizungsanlage mit einem Wärmeerzeuger 1 und drei Verbraucherkreisen 2, 3 und 4. Die Heizungsanlage weist eine Vorlaufleitung 5 und eine Rücklaufleitung 6 auf, an die die Wärmeverbraucher 7, 8 und 9 über Vorläufe 10 und Rückläufe 11 angeschlossen sind. Die Verbraucherkreise 2, 3 sind Heizkreise, bei denen der Vorlauf 10 und der Rücklauf 11 über Verbindungsleitungen 12 und Mischventile 13 verbunden sind, so dass mittels in den Vorläufen 10 angeordneten Verbraucherkreispumpen 14 ein Teil des Wärmeträgers im Kreislauf über die Verbindungsleitung 12 innerhalb des jeweiligen Verbraucherkreises 2 bzw. 3 gefördert werden kann. Die Mischventile 13 werden beim Stand der Technik zum Regeln der Vorlauftemperatur der Verbraucherkreise 2, 3 eingesetzt. Tritt in den Verbraucherkreisen 2, 3 ein hoher Wärmebedarf auf, so wird bei herkömmlichen Steuerschaltungen die Verbindungsleitung 12 über das Mischventil 13 abgesperrt und daher der Vorlaufleitung 5 ein grosser Volumenstrom entnommen. Dies kann bei einem entsprechenden Wärmebedarf aller Verbraucherkreise dazu führen, dass der der Vorlaufleitung 5 entnommene Volumenstrom den Volumenstrom übersteigt, der aufgrund der Wärmeleistung des Wärmeerzeugers 1 auf die vorgegebene Vorlauftemperatur erwärmt werden kann. Um die sonst in einem solchen Fall eingesetzte hydraulische Ausgleichsleitung mit ihren Nachteilen zu vermeiden, wird nun der den Verbraucherkreisen 2, 3 und 4 aus der Vorlaufleitung 5 zugeführte Volumenstrom von einem Steuer- und Regelgerät 15 gesteuert. Dies bedeutet, dass in Bezug auf die Verbraucherkreise 2 und 3 die Mischventile 13 nur in einem Ausmass geschlossen werden, das den der Vorlaufleitung 5 entnommenen Volumenstrom auf eine in Bezug auf die Wärmeleistung des Wärmeerzeugers 1 zulässige Grösse beschränkt. Die diesen Volumenstrom übersteigende Wärmeträgerströmung wird über die Verbindungsleitungen 12 im Kreislauf innerhalb der Verbraucherkreise 2, 3 geführt. Es ist hier zu beachten, dass die durch die Wärmeverbraucher 7, 8 geförderten Volumenströme wegen der mit fester Drehzahl laufenden Verbraucherkreispumpen 14 der Verbraucherkreise 2, 3 ja annähernd konstant sind.

Ist im Verbraucherkreis keine Verbindungsleitung zwischen dem Vorlauf 10 und dem Rücklauf 11 vorgesehen, wie dies beim Verbraucherkreis 4 der Fall ist, so kann der der Vorlaufleitung 5 entnommene Volumenstrom über die Verbraucherkreispumpe 14' beschränkt werden, deren Drehzahl in diesem Fall durch das Steuer- und Regelgerät 15 einstellbar sein muss. Selbstverständlich muss vom Steuer- und Regelgerät 15 die Summe der den einzelnen Verbraucherkreisen 2, 3 und 4 aus der Vorlaufleitung 5 zugeführten Volumenströme berücksichtigt werden. Das Steuer- und Regelgerät 15 steuert dazu die Drehzahl der Verbraucherkreispumpe 14' des Verbraucherkreises 4 und die Stellung der Mischventile 13 der beiden Verbraucherkreise 2 und 3.

Ein hoher Wärmebedarf der Wärmeverbraucher 7, 8 und 9 manifestiert sich in der Regel in einer hohen Solltemperatur für den Wärmeerzeuger 1, die der Wärmeerzeuger 1 durch Erhöhung seiner Leistung zu erreichen sucht. Erreicht die Kesselleistung des Wärmeerzeugers 1 ihren Maximalwert ohne dass der Istwert der Kesseltemperatur den Sollwert erreicht, dann bedeutet dies, dass der von den Wärmeverbrauchern 7, 8 und 9 angeforderte Wärmebedarf die vom Wärmeerzeuger 1 lieferbare Wärmeleistung übersteigt. Durch eine Drosselung des durch die Vorlaufleitung 5, die Verbraucherkreise 2 - 4 und durch die Rücklaufleitung 6 zirkulierenden Wäremträgermediums (in der Regel Wasser) wird nun erreicht, dass die Temperaturen in der Vorlaufleitung 5 und in der Rücklaufleitung 6 ansteigen. Der durch die Vorlaufleitung 5 fliessende Volumenstrom wird soweit gedrosselt, bis der Istwert der Kesseltemperatur den Sollwert erreicht. Dies bedeutet, dass die Isttemperatur des den Vorläufen 10 zugeführten Wassers wieder grösser als deren Sollwert ist, so dass den Verbraucherkreisen 2 - 4 immerhin heisses Wasser, wenn auch nur in ungenügender Menge, zur Verfügung steht. Das Steuer- und Regelgerät 15 steuert dabei die in den Verbraucherkreisen 2 - 4 zirkulierenden Volumenströme entweder gemäss vordefinierten Prioritäten (Vorrang) oder reduziert sie proportional zu den von den Wärmeverbrauchern 7, 8 und 9 angeforderten Nennleistungen.

Sobald die Isttemperatur des Wärmeträgermediums die Solltemperatur erreicht, macht das Steuer- und Regelgerät 15 die Drosselung der Volumenströme mindestens teilweise rückgängig. Die Regelung der Volumenströme erfolgt in dieser Phase derart, dass einerseits die Isttemperatur weder zu stark unter die Solltemperatur absinkt noch so weit über die Solltemperatur ansteigt, dass der Wärmeerzeuger 1 abschaltet. Auf diese Weise ist dafür gesorgt, dass einerseits die vom Wärmeerzeuger 1 bereitgestellte Energie möglichst optimal genutzt wird und dass andererseits der Wärmeerzeuger 1 eingeschaltet bleibt, solange der Wärmebedarf der Wärmeverbraucher 7- 9 nicht gedeckt ist. Es sei hier noch erwähnt, dass diese Regelung nur als Angabe des Regelungsprinzips zu verstehen ist, so dass z.B. bei einer PID Regelung die Drosselung der Volumenströme bereits reduziert wird, bevor die Isttemperatur die Solltemperatur erreicht hat. Diese Phase findet ihren Abschluss, wenn der Wärmeerzeuger 1 den Wärmebedarf der Wärmeverbraucher 7- 9 wieder vollständig zu decken vermag.

Bei Wärmeerzeugern 1 mit mehr als einer Brennerstufe oder bei mehreren, in einer Kaskade angeordneten Wärmeerzeugern 1 erfolgt die Steuerung in der beschriebenen Art immer dann, wenn die Kesselleistung bei der gewählten Brennerstufe bzw. wenn die Kesselleistung der eingeschalteten Wärmeerzeuger 1 ihren Maximalwert erreicht hat und wenn, beispielsweise wegen einer vom Encrgielieferanten verfügten Sperre, die Brennerstufe nicht erhöht oder kein weiterer Wärmeerzeuger 1 zugeschaltet werden kann.

Die Erfindung lässt sich auch benutzen, wenn, wie in der Fig. 2 dargestellt ist, erstens die Vorlaufleitung 5 und die Rücklaufleitung 6 durch eine Bypassleitung 16 und ein Mischventil 17 verbunden sind und zwischen dem Mischventil 17 und dem Wärmeerzeuger 1 eine Pumpe 18 angeordnet ist und wenn zweitens parallel zur Bypassleitung 16 eine hydraulische Weiche 19 oder eine hydraulische Ausgleichsleitung angeordnet ist, die die Vorlaufleitung 5 und die Rücklaufleitung 6 verbindet. Bei dieser Anlage lässt sich die Temperatur des dem Wärmeerzeuger 1 zurückgeführten Wärmeträgermediums durch Zumischung von heissem Wärmeträgermedium aus der Vorlaufleitung 5 vom Steuer- und Regelgerät 15 steuern. Die hydraulische Weiche 19 dient in bekannter Weise dem automatischen hydraulischen Abgleich der in den verschiedenen Kreisen zirkulierenden Volumenströme.

Übersteigt der Wärmebedarf der Wärmeverbraucher 7 - 9 die vom Wärmeerzeuger 1 lieferbare Wärmeleistung, dann führt dies dazu, dass die Summe der der Vorlaufleitung 5 entnommenen Volumenströme grösser wird als der von der Pumpe 18 geförderte Volumenstrom und dass daher der Vorlaufleitung 5 durch die hydraulische Weiche 19 hindurch kälteres Wärmeträgermedium aus der Rücklaufleitung 6 zugeführt wird. In der Vorlaufleitung 5 sind deshalb vor und nach der hydraulischen Weiche 19 zwei als Temperatursensoren ausgebildete Sensoren 20 und 21 angebracht. Sobald die Differenz der von den beiden Temperatursensoren 20 und 21 gemessenen Temperaturen T₂₀ - T₂₁ positiv wird, da der Vorlaufleitung 5 kälteres Wasser aus der Rücklaufleitung 6 zugeführt wird, drosselt das Steuer- und Regelgerät 15 die der Vorlaufleitung 5 entnommenen Volumenströme entsprechend einer Vorrangschaltung oder proportional zu den Nenndurchflüssen der einzelnen Verbraucherkreise 2 - 4. Die Drosselung erfolgt durch eine Verkleinerung der Drehzahl der Verbraucherkreispumpe 14' des Verbraucherkreises 4 bzw. durch Öffnen der Mischventile 13 der Verbraucherkreise 2 und/oder 3. Damit jedoch kein heisses Wasser von der Vorlaufleitung 5 durch die hydraulische Weiche 19 hindurch direkt in die Rücklaufleitung 6 fliesst, drosselt das Steuer- und Regelgerät die der Vorlaufleitung 5 entnommenen Volumenströme nur soweit, dass die Temperaturdifferenz T₂₀ - T₂₁ grösser als ein endlicher, positiver Wert ΔTₘᵢₙ bleibt.

Selbstverständlich ist es möglich, als Sensoren 20 und 21anstelle der Temperatursensoren Durchflussmesser oder Wärmezähler zu verwenden, aus deren Ausgangssignalen sich ebenfalls die Information ableiten lässt, ob und in welcher Richtung Wasser durch die hydraulische Weiche 19 fliesst. Die Drosselung der Volumenströme erfolgt dann derart, dass entweder die von den beiden Wärmezählern gemessenen Wärmeleistungen oder die von den beiden Durchflussmessern gemessenen Durchflüsse gleich gross sind.

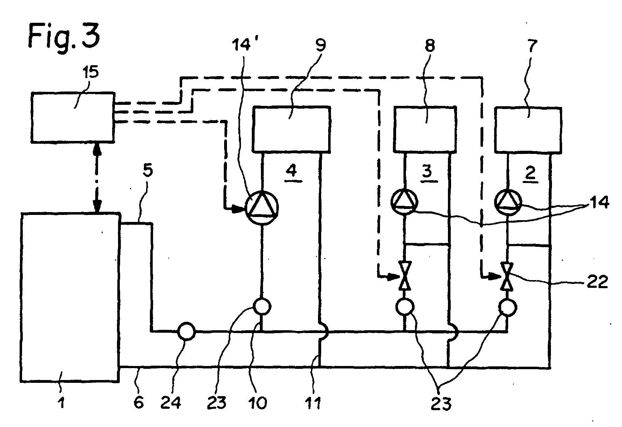

Es gibt nun Heizungsanlagen, bei denen die von den Wärmeverbrauchern 7 - 9 bezogene Wärmeenergie einzeln erfasst und verrechnet wird. In der Fig. 3 ist eine solche Anlage dargestellt. Im Vorlauf 10 eines jeden der Verbraucherkreise 2 - 4 sind ein Ventil 22 oder die drehzahlsteuerbare Verbraucherkreispumpe 14' zur Steuerung des Durchflusses und ein Wärmezähler 23 zur Erfassung der von den entsprechenden Wärmeverbrauchern 7 bzw. 8 bzw. 9 bezogenen Wärmeenergien eingebaut. Das Ventil 22 und der Wärmezähler 23 können getrennte Geräte sein oder als ein einziges Gerät ausgebildet sein. Sie sind eingerichtet, den aktuellen Volumenstrom an das Steuer- und Regelgerät 15 zu melden. Im Steuer- und Regelgerät 15 ist weiter für jeden der Verbraucherkreise 2 - 4 der Wert seines Nennvolumenstromes gespeichert. Ist der aktuelle Volumenstrom in einem der Verbraucherkreise 2 - 4 kleiner als der Wert des Nennvolumenstromes, dann reduziert das Steuer- und Regelgerät 15 den Durchfluss der Ventile 22 bzw. die Drehzahl der Verbraucherkreispumpe 14' der anderen Verbraucherkreise, bis entweder der aktuelle Volumenstrom in keinem der Verbraucherkreise 2 - 4 kleiner als dessen Nennvolumenstrom ist oder bis die aktuellen Volumenströme in den Verbraucherkreisen 2 - 4 alle gleichmässig oder entsprechend einer Vorrangschaltung unterversorgt sind. Bei dieser Betriebsart ist dafür gesorgt, dass der Volumenstrom durch jeden der Verbraucherkreise 2 - 4 seinem gewünschten Nennvolumenstrom entspricht, unabhängig davon, welche Nennvolumenströme in den anderen Verbraucherkreisen 2 - 4 eingestellt sind.

In der Fig. 3 ist noch ein weiterer Wärmezähler 24 dargestellt, der in die Vorlaufleitung 5 eingebaut ist. Wie bereits erwähnt, ist es auch möglich, als Eingangsgrössen für das Steuer- und Regelgerät 15 anstelle von Temperaturen wie Isttemperatur, Solltemperatur des Kessels bzw. der Vorlaufleitung 5 und/oder der Signale der Temperatursensoren 20 und 21 die Signale von Wärmezählern oder Durchflusszählern zu verwenden. In diesem Fall misst der Wärmezähler 24 die vom Wärmeerzeuger 1 an die Verbraucherkreise 2 - 4 gelieferte Wärmeleistung, während die in den Verbraucherkreisen 2 - 4 angeordneten Wärmezähler 23 die bezogenen Wärmeleistungen erfassen. Das Steuer- und Regelgerät 15 ist nun eingerichtet, die Volumenströme in den Verbraucherkreisen 2 - 4 entsprechend einer Vorrangschaltung oder proportional zu ihrem Nennvolumenstrom zu drosseln, wenn der Wärmeerzeuger 1 mit Maximalleistung läuft und wenn der von den Wärmeverbrauchern 7 - 9 angeforderte Wärmebedarf insgesamt grösser ist die vom Wärmeerzeuger 1 lieferbare und vom Wärmezähler 24 gemessene Wärmeleistung.

## Patentansprüche

1. Steuer- und Regelgerät (15) für eine Heizungsanlage, die wenigstens einen Wärmeerzeuger (1) aufweist, wobei ein vom Wärmeerzeuger (1) erhitztes Wärmeträgermedium über eine Vorlaufleitung (5) zu Wärmeverbraucher (7-9) enthaltenden Verbraucherkreisen (2-4) befördert wird und wobei in wenigstens einem der Verbraucherkreise der der Vorlaufleitung entnommene Volumenstrom durch entsprechende Mittel (12, 13, 14'; 22, 14') veränderbar ist, **dadurch gekennzeichnet, dass** das Steuer- und Regelgerät die der Vorlaufleitung von den Verbraucherkreisen entnommenen Volumenströme mittels dieser Mittel reduziert, wenn der Wärmeerzeuger seine maximale Leistung bzw. die maximale Leistung einer vorgegebenen Betriebsstufe abgibt und wenn die vom Wärmeerzeuger gelieferte Wärmeleistung kleiner als der von den Wärmeverbrauchern angeforderte Wärmebedarf ist.

2. Steuer- und Regelgerät nach Anspruch 1, **dadurch gekennzeichnet, dass** es die Ist- und die Solltemperatur des vom Wärmeerzeuger gelieferten Wärmeträgermediums zur Bestimmung heranzieht, ob die vom Wärmeerzeuger gelieferte Wärmeleistung kleiner als der von den Wärmeverbrauchern angeforderte Wärmebedarf ist.

3. Steuer- und Regelgerät nach Anspruch 1, **dadurch gekennzeichnet, dass** es die von den Wärmeverbrauchern bezogenen und beispielsweise mittels Wärmezählern (23) gemessenen Wärmeleistungen und die vom Wärmeerzeuger abgegebene, beispielsweise mittels eines weiteren Wärmezählers (24) gemessene Wärmeleistung heranzieht zur Bestimmung, ob die vom Wärmeerzeuger gelieferte Wärmeleistung kleiner als der von den Wärmeverbrauchern angeforderte Wärmebedarf ist.

4. Steuer- und Regelgerät nach einem der vorhergehenden Ansprüche 1 bis 3, **dadurch gekennzeichnet, dass** es die Volumenströme proportional zu den Nennvolumenströmen der Verbraucherkreise drosselt.

5. Steuer- und Regelgerät nach einem der vorhergehenden Ansprüche 1 bis 3, **dadurch gekennzeichnet, dass** es die Volumenströme entsprechend einer Vorrangschaltung drosselt.

## Claims

1. Control and regulating apparatus (15) for a heating system which has at least one heat generator (1), the heat transfer medium heated by the heat generator (1) being conveyed via a forward-flow line (5) to consumer circuits (2-4) containing heat consumers (7-9), and the volume of flow extracted from the forward-flow line being variable in at least one of the consumer circuits by corresponding means (12, 13, 14'; 22, 14'), **characterized in that** the control and regulating apparatus, by these means, reduces the volume flows extracted from the forward-flow line by the consumer circuit when the heat generator delivers its maximum power output or the maximum power output of the predetermined operating stage and when the heat output delivered by the heat generator is lower than the heat requirement demanded by the heat consumers.

2. Control and regulating apparatus according to Claim 1, **characterized in that** it utilizes the actual and the desired temperature of the heat transfer medium delivered by the heat generator in order to determine whether the heat output delivered by the heat generator is lower than the heat requirement demanded by the heat consumers.

3. Control and regulating apparatus according to Claim 1, **characterized in that** it utilizes the heat outputs acquired by the heat consumers and measured, for example, by means of heat counters (23) and the heat output delivered by the heat generator and measure it, for example, by means of a third heat counter (24) in order to determine whether the heat output delivered by the heat generator is lower than the heat requirement demanded by the heat consumers.

4. Control and regulating apparatus according to one of the preceding claims 1 to 3, **characterized in that** it throttles the volume flows in proportion to the nominal volume flow to the consumer circuits.

5. Control and regulating apparatus according to one of the preceding Claims 1 to 3, **characterized in that** it throttles the volume flows according to a priority switching arrangement.

## Revendications

1. Dispositif de commande et de régulation (15) pour une installation de chauffage qui présente au moins un générateur de chaleur (1), un fluide caloporteur échauffé par le générateur de chaleur (1) étant transporté vers des circuits utilisateurs (2-4) contenant des consommateurs de chaleur (7-9) par l'intermédiaire d'une canalisation montante (5), et le débit volumétrique prélevé sur la canalisation montante dans au moins l'un des circuits utilisateurs étant modifiable par des moyens correspondants (12, 13, 14' ; 22, 14'), **caractérisé en ce que** le dispositif de commande et de régulation réduit les débits volumétriques prélevés sur la canalisation montante des circuits utilisateurs au moyen de ces moyens, lorsque le générateur de chaleur dégage sa puissance maximale resp. la puissance maximale d'un échelon de fonctionnement prédéfini et lorsque la puissance calorifique fournie par le générateur de chaleur est inférieure aux besoins en chaleur demandés par les consommateurs de chaleur.

2. Dispositif de commande et de régulation selon la revendication 1, **caractérisé en ce qu'**il prend en considération la température réelle et la température de consigne du fluide caloporteur fourni par le générateur de chaleur pour déterminer si la puissance calorifique fournie par le générateur de chaleur est inférieure aux besoins en chaleur demandés par les consommateurs de chaleur.

3. Dispositif de commande et de régulation selon la revendication 1, **caractérisé en ce qu'**il prend en considération les puissances calorifiques relatives aux consommateurs de chaleur et mesurées par exemple au moyen de compteurs de chaleur (23) et qu'il prend en considération la puissance calorifique dégagée par le générateur de chaleur, mesurée par exemple au moyen d'un compteur de chaleur (24) supplémentaire pour déterminer si la puissance calorifique fournie par le générateur est inférieure aux besoins en chaleur demandés par les consommateurs de chaleur.

4. Dispositif de commande et de régulation selon l'une quelconque des revendications 1 à 3, **caractérisé en ce qu'**il réduit les débits volumétriques proportionnellement aux débits volumétriques nominaux des circuits utilisateurs.

5. Dispositif de commande et de régulation selon l'une quelconque des revendications 1 à 3, **caractérisé en ce qu'**il réduit les débits volumétriques de manière correspondant à un circuit prioritaire.
